# EUROPEAN PATENT APPLICATION

(11) **EP 1 288 921 A2**
(43) Date of publication of application: **05.03.2003**
(21) Application number: 02017713.5
(22) Date of filing: 07.08.2002
(51) Int. Cl.: G11B 7/0045

(54) **Optical disc drive**

(30) Priority: 07.08.2001 JP 2001239601
(71) Applicant: Mitsumi Electric Company Ltd., Chofu-shi Tokyo (JP)
(72) Inventor: Maekawa, Yuichi, Mitsumi Electric Co., Ltd, Atsugi-shi, Kanagawa (JP)
(74) Representative: Patentanwälte Dr. Solf & Zapf

(57) **Abstract**

Disclosed is an optical disc drive that can resume to record data consecutively from the position just after the data recording operation was suspended without overwriting when recording data onto an optical disc. The optical disc drive includes a rotational driving mechanism for rotating the loaded optical disc; an optical pick-up having emitting means (3) that emits a laser beam for recording data to the optical disc; a laser control circuit (55) for controlling an output of the laser beam; a drive circuit (43) for driving the emitting means; and voltage hold means (9,91,92) provided between the laser control circuit and the drive circuit for holding a voltage to be input to the drive circuit at a voltage value at which an output of the laser beam becomes an optimum level for recording data onto the optical disc. The voltage hold means holds the voltage to be input to the drive circuit to the voltage value at which the output of the laser beam becomes the optimum level for recording.

## Description

### BACKGROUND OF THE INVENTION

### Field of the invention

The present invention relates to an optical disc drive.

### Description of the Prior Art

There are known optical disc drives for recording data onto and reading data out from a recordable optical disc such as a CD-R, a CD-RW, and the like.

In general, such optical disc drives comprise a rotational driving mechanism for rotating a loaded optical disc; an optical pick-up (optical head) which is movable in a radial direction of the loaded optical disc for emitting a laser beam to record data (information) to, and read data from the optical disc; and an optical pick-up moving mechanism, which is equipped with a sled motor for moving the optical pick-up in a radial direction of the disc.

The optical pick-up comprises an optical pick-up body (optical pick-up base), which is equipped with a laser diode and a split photodiode; an objective lens, which is supported by suspension springs on the optical pick-up body to enable the lens to move in the direction of the optical axis of a loaded optical disc (rotational axis direction), as well as in a radial direction of the optical disc; a focusing actuator for moving the objective lens in the optical axis direction; and a tracking actuator for moving the objective leans in the radial direction.

In such optical disc drives, an optical pick-up is moved to a target track (target address), and at the target track data is recorded (written) onto the optical disc and/or read out (reproduced) from the optical disc, while a focus control operation and a tracking control operation are carried out.

In such optical disc drives, data is recorded onto an optical disc by being sequentially transferred from an external device, such as a personal computer, to a memory of the optical disc drive, and then being sequentially recorded onto the optical disc from the memory.

However, this system suffers from a problem in that an amount of data stored in the memory of the optical disc drive may, at any time during a recording operation, become insufficient due to latency in transfer of data from the external device.

When an amount of data stored in the memory of the optical disc drive falls below a predetermined amount, a recording operation is suspended. Then, once it is confirmed that an amount of data stored in the memory is equal to or exceeds the predetermined amount, the recording operation resumes at a position on the disc where it was suspended. Here, it is to be noted that in order to locate the position, an output of a laser beam is once lowered to a read level (reproduction level). Using this system, a data recording operation can be suspended and then resumed so that the data is consecutively written onto the optical disc.

However, an output of a laser beam must be raised from the read level to a write level (record level) when the data recording operation is resumed, which requires a predetermined amount of time to be completed.

Thus, in the conventional system, to record data onto an optical disc from a position consecutive to that where a recording operation was suspended (record restart position), the recording operation must be resumed from a predetermined position before the record restart position so that a level of the laser beam becomes a required write level (optimum level for recording) at the record restart position.

For this reason, the laser beam is being emitted along a track of the optical disc over a predetermined distance, i.e., the distance from the predetermined position to the record restart position for a predetermined time. As a result, data may be recorded onto an area of the track of the optical disc corresponding to the predetermined distance before the record restart position with a laser beam output that is increasing to the write level. Consequently, there is a problem that the data previously recorded in the area is overwritten with the laser beam so that the previously recorded data cannot be reproduced correctly.

Therefore, when a recording operation is suspended and resumed in many times, the number of such overwritten area is increased, thus leading the case that the above problem becomes conspicuous.

### SUMMARY OF THE INVENTION

In view of the stated problem of the conventional art, it is an object of the present invention to provide an optical disc drive wherein data recording can be resumed after suspension without any overwriting of data on an optical disc.

In order to achieve the above object, the present invention is directed to an optical disc drive that can read put data from or record and read out data to and from an optical disc when the optical disc is loaded into the optical disc drive. The optical disc drive comprises a rotational driving mechanism for rotating the loaded optical disc; an optical pick-up having emitting means that emits a laser beam for recording data to the optical disc; a laser control circuit for controlling an output of the laser beam; a drive circuit for driving the emitting means; and voltage hold means provided between the laser control circuit and the drive circuit for holding a voltage to be input to the drive circuit at a voltage value at which an output of the laser beam becomes an optimum level for recording data onto the optical disc.

In this invention, it is preferred that the voltage hold means holds the voltage to be input to the drive circuit to the voltage value, at which the output of the laser beam becomes the optimum level for recording, after trial writing is carried out onto the optical disc by changing the output of the laser beam in a stepwise manner to determine the optimum level of the output of the laser beam for recording data onto the optical disc.

Further, the optical disc drive in the present invention may further comprise detection means for detecting voltage values corresponding to a plurality of output levels of the laser beam during the trial writing, in which said voltage hold means is configured so as to hold the voltage to be input to said drive circuit to a voltage value corresponding to the optimum level among the voltage values detected by said detection means.

In one embodiment of the present invention, the optical disc drive may further comprise a memory for storing data. In this case, the optical disc drive may be configured so that a recording operation is suspended when an amount of data stored in the memory becomes equal to or less than a predetermined amount during the recording operation. Also, the voltage hold means holds may be configured so as to hold the voltage to be input to the drive circuit just before the recording operation is suspended.

In another embodiment of the present invention, the voltage hold means includes a circuit having a first input terminal to which the voltage output from the laser control circuit is input, a second input terminal to which an impressed voltage is input, and an output terminal for outputting the voltage to be input to the drive circuit. In this case, the optical disc drive is constructed so as to apply the impressed voltage to the second input terminal so that the voltage to be input to the drive circuit becomes the voltage at which the output of the laser beam becomes the optimum level.

Further, in another embodiment of the present invention, the voltage hold means may have a voltage adjustment circuit that can adjust the voltage to be input to the drive circuit. In this case, the optical disc drive may be configured so that the voltage to be input to the drive circuit is raised by the voltage adjustment circuit if it is necessary to raise the voltage to be input to the drive circuit after the impressed voltage has been applied.

Further, it is preferred that the voltage adjustment circuit has a transistor between the first input terminal and the output terminal. It is also preferred that the voltage adjustment circuit has a resistance element between the second input terminal and the output terminal. In this case, the transistor is a PNP bipolar transistor having a base terminal, a collector terminal and an emitter terminal. The base terminal of the transistor is connected to the first input terminal, and the collector terminal of the transistor is connected to the output terminal.

In another embodiment of the present invention, the optical disc drive may further comprise a digital/analog converter that is used for applying the impressed voltage. Alternatively or in addition, the optical disc drive of the present invention may further comprise an analog/digital converter that is used for detecting the voltage to be input to the drive circuit.

Further, in this invention, it is preferred that the emitting means has a laser diode.

Moreover, in this invention, the drive circuit may be configured so as to increase the output of the laser beam when the voltage to be input to the drive circuit is raised, and so as to decrease the output of the laser beam when the voltage to be input to the drive circuit drops.

These and other objects, structures and advantages of the present invention will be apparent from the following description of the preferred embodiment when it is considered in conjunction with the appended drawings.

### BRIEF DESCRIPTION OF THE DRAWINGS

Fig. 1 is a block diagram illustrating a circuit configuration (principal part) of one embodiment of an optical disc drive according to the present invention.
Fig. 2 is a circuit diagram illustrating an example of a structure of a section for controlling an output of a laser beam in an optical disc drive during recording of data, according to the present invention.
Fig. 3 shows a flow of electric current in the circuit shown in Fig. 2 when an output of a laser beam is raised to level for recording data.
Fig. 4 is a timing chart illustrating a WRITE POWER signal and the output of a laser beam during recording.

### DETAILED DESCRIPTION OF THE PREFERRED EMBODIMENTS

Detailed description of the preferred embodiment of an optical disc drive according to the present invention will now be made, with reference to the appended drawings.

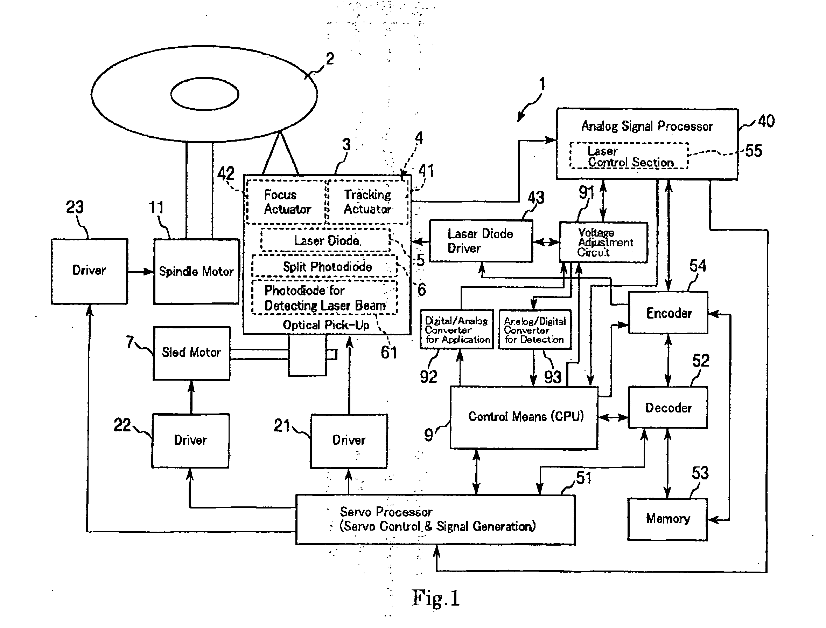

Fig. 1 is a block diagram illustrating a circuit configuration (principal part) of an embodiment of an optical disc drive according to the present invention.

The optical disc drive 1 as shown in Fig. 1 may record and/or reproduce data (information) to and/or from an optical disc 2 (for example, CD-R, CD-RW).

A spiral pre-groove (WOBBLE) (not shown) is formed along a track in the optical disc 2.

The spiral pre-groove is recorded with Absolute Time In Pre-groove (ATIP) information (time information), and meanders for a predetermined period (22.05 kHz as a reference speed) in a radial direction of the optical disc 2. More specifically, the ATIP information to be recorded is biphase modulated and frequency-modulated at a carrier frequency of 22.05 kHz.

The pre-groove may function as a guide groove to form pits and/or lands (recording of pits and lands) for optical disc 2. Further, information recorded in the pre-groove may be utilized for controlling a rotational speed of the optical disc 2. Additionally, the information recorded may be reproduced and used to specify a recording position (absolute time) on the optical disc 2.

The optical disc drive 1 has a rotation driving mechanism for rotating a turntable on which an optical disc 2 is loaded, the rotation driving mechanism has a spindle motor 11 for rotating the turntable, a driver 23 for driving the spindle motor 11, and the turntable (not shown) on which the optical disc 2 is provided.

Further, the optical disc drive 1 comprises an optical pick-up (optical head) 3 capable of moving in a radial direction of the optical disc 2 (a radial direction of a turntable with respect to the optical disc 2, which is loaded on the turntable); an optical pick-up moving mechanism for moving the optical pick-up 3 in the radial direction (two subject: disc and turntable; they should be unified); a control means (CPU) 9; an analog signal processor (ASP) 40; a laser diode driver 43; a servo processor (DSP) 51; a decoder 52; a memory 53 (e.g. Random Access Memory (RAM)); an encoder 54; a voltage adjustment circuit 91; a digital/analog converter 92 for application; and an analog/digital converter 93 for detection. (Hereinafter, the radial direction of the optical disc 2 will be referred to simply as --- the radial direction ---.

The optical pick-up moving mechanism comprises a sled motor 7, a driver 22 for driving the sled motor 7, and a power transmission mechanism (not shown). A rotational speed of the sled motor 7 can be decelerated and transmitted to the optical pick-up 3 by the power transmission mechanism, and the rotational movement of the sled motor 7 may be converted to the linear movement of the optical pick-up 3.

The optical pick-up 3 further comprises an optical head body (optical pick-up base) (not shown) that may be equipped with a laser diode 5 for emitting a laser beam; a split photodiode 6; and a photodiode for detecting a laser beam 61, which receives the laser beam emitted from the laser diode 5 and converts the amount of received light to an electric current. Moreover, the optical pick-up 3 comprises an objective lens (condenser) (not shown). The laser diode 5 is driven by means of a laser diode driver 43; and the drive of the laser diode driver 43 is controlled by means of the analog signal processor 40.

The analog signal processor 40 has a laser control section 55 (laser control circuit) for controlling an output of the laser beam when recording or reproducing data to or from the optical disc 2.

The objective lens is supported by suspension springs (not shown in the drawings) provided on the optical pick-up base. Further, the objective lens is arranged so as to be movable with respect to the optical pick-up body in both a radial direction and an optical axis direction of the objective lens. Hereinafter, the direction of the optical axis of the objective lens will be referred to simply as --- the optical axis direction ---, and the direction of the rotational axis of the optical disc 2 will be referred to simply as --- the rotational axis direction ---.

The objective lens is initially set at a reference position (center point), which is predetermined on the optical pick-up body, i.e., a neutral position (hereinafter, referred to simply as --- the reference position ---).

When the objective lens is shifted from its reference position, it is biased to its reference position by the restoring force of the suspension springs.

Further, the optical pick-up 3 has an actuator 4 for moving the objective lens with respect to the optical pick-up base. The actuator 4 comprises a tracking actuator 41 for moving the objective lens in a radial direction with respect to the optical pick-up base, and a focus actuator 42 for moving the objective lens in the optical axis direction (rotational axis direction).

The actuator 4, i.e., the tracking actuator 41 and the focus actuator 42 may be independently driven by the driver 21.

The control means 9 usually includes a microcomputer (CPU). The control means 9 carries out overall control of the optical disc drive 1. Namely, the control means 9 controls the optical pick-up 3 (including the actuator 4, the laser diode 5, and so on), the sled motor 7, the spindle motor 11, the analog signal processor 40, a servo processor 51, a decoder 52, a memory 53, an encoder 54, the voltage adjustment circuit 91, the digital/analog converter 92, and the like.

The voltage hold means comprises the control means 9, the voltage adjustment circuit 91, the digital/analog converter 92, and the analog/digital converter 93. The voltage hold means holds the voltage to be input to the laser diode driver 43 at a voltage equivalent to a record output level of the laser beam.

The optical disc drive 1 may be removably connected to an external device (e.g., a computer) via an interface control section (not shown).

When the optical disc drive 1 records data onto the optical disc, the data to be recorded is sequentially transferred from the external device to the memory 53 via the interface control section, and then sequentially stored in the memory 53. The data stored in the memory 53 is then sequentially recorded onto the optical disc.

Further, when an amount of data stored in the memory 53 is less than a first amount, the data recording operation is suspended. If it is confirmed that a second amount of data exceeding the first amount is stored in the memory 53, the data recording operation is resumed from the same position on the disc where it was suspended (record restart position). Namely, the optical disc drive 1 employs a system whereby the data recording operation can be suspended and then resumed at a record restart position on the optical disc in a consecutive manner. As will hereinafter be described in detail, in the optical disc drive 1 the voltage hold means holds the voltage to be input to the laser diode driver 43 immediately prior to suspension of a data recording operation.

Hereinafter, the operation whereby data recording is suspended and resumed to record data consecutively will be referred to simply as --- consecutive data recording ---.

Next, the structure of the part for controlling an output of the laser beam while the optical disc drive records data, i.e., the structure of the laser diode 5, the photodiode for detecting a laser beam 61, the control means 9, the laser control section 55, the laser diode driver 43, the voltage adjustment circuit 91, the digital/analog converter 92, and the analog/digital converter 93 will be described.

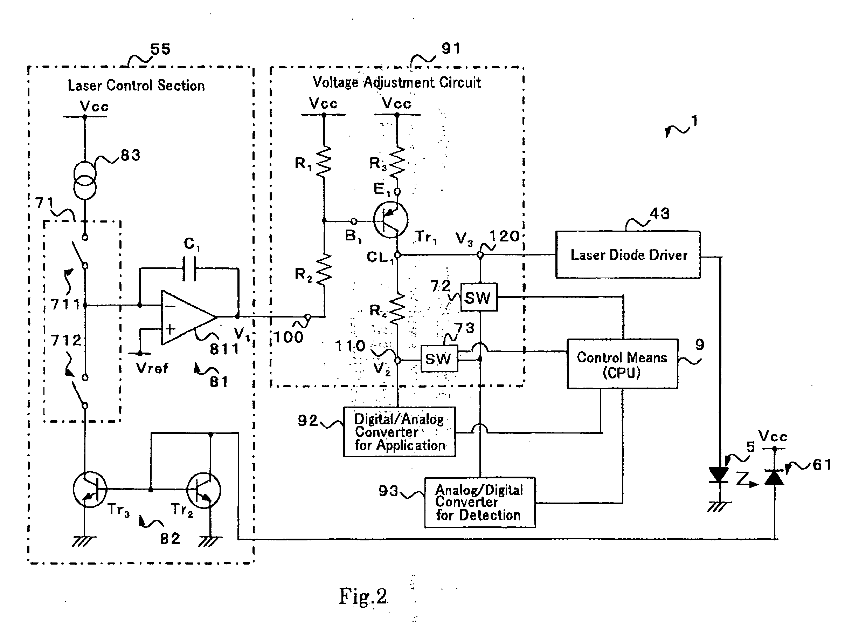

Fig. 2 is a circuit diagram illustrating an example of the structure of the section for controlling an output of the laser beam during recording of data in an optical disc drive according to the present invention.

The laser control section 55 as shown in Fig. 2, controls an output of the laser beam during recording of data in the sections of the overall laser control section 55. (data is not recorded into these sections.)

Referring now to Fig. 2, the laser control means 55 comprises a current mirror circuit 82 having two transistors Tr2 and Tr3, a current generator 83, an interlock switch 71 having two switches 711 and 712, and integration circuit 81 having an operational amplifier 811 and a condenser C1.

The interlock switch 71 is constructed so that the switches 711 and 712 work in cooperation. When the switches 711 and 712 are closed together, the interlock switch 71 is turned ON. When the switches 711 and 712 are opened together, the interlock switch 71 is turned OFF.

The photodiode for detecting a laser beam 61 and the interlock switch 71 are connected to the current mirror circuit 82.

When the interlock switch 71 is ON, a current equal to the current flowing from the photodiode for detecting a laser beam 61 to transistor Tr2 is caused to flow from the current generator 83 to the transistor Tr3 in the current mirror circuit 82.

The reference voltage Vref having a predetermined level is applied to the non-inverting input terminal (+) of the operational amplifier 811 in the integration circuit 81; and the inverting input terminal (-) of the operational amplifier 81 is connected to the interlock switch 71.

The inverting input terminal (-) of the operational amplifier 81 is also connected to one terminal of the condenser C1; and the other terminal of the condenser C1 is connected to the output terminal of the operational amplifier 811.

Consequently, when the interlock switch 71 is turned ON, the current flows from the current generator 83 to the condenser C1, and also flows from the current generator 83 to the current mirror circuit 82.

As shown in Fig. 2, the voltage adjustment circuit 91 comprises four resistance elements R1, R2, R3 and R4, a transistor Tr1, and a first switch for detection 72 and a second switch for detection 73.

The transistor Tr1 is a PNP bipolar transistor having a base terminal B1, a collector terminal CL1and an emitter terminal E1.

Further the voltage adjustment circuit 91 has a first input terminal 100 to which a voltage V1 output from the laser control section 55 is input, a second input terminal 110 to which an impressed voltage Vin is input, and an output terminal for outputting a voltage V3 to be input to the laser diode driver 43.

The voltage adjustment circuit 91 has the transistor Tr1 between the first input terminal 100 and the output terminal 120, and the voltage adjustment circuit 91 also has the resistance element R4 between the second input terminal 110 and the output terminal 120.

The base terminal B1 of the transistor Tr1 is connected to the first input terminal 100 via the resistance element R2, and the collector terminal CL1 of the transistor Tr1 is connected to the output terminal 120. Further, the second input terminal 110 is connected to the output terminal 120 via the resistance element R4.

The first and second switches for detection 72 and 73 are configured so as to be opened independently. The control means 9 controls the open and/or close operation of these switches 72 and 73.

The second input terminal 110 of the voltage adjustment circuit 91 is connected to the digital/analog converter 92 that is used for applying the impressed voltage Vin to the voltage adjustment circuit 91, and the output terminal 120 is connected to the analog/digital converter 93 that is used for detecting the voltage V3 to be input to the laser diode driver 43.

In addition, the analog/digital converter 93 is also connected to the second input terminal 110, and the analog/digital converter 93 is used for detecting the voltage V2 of the second input terminal 110.

The control means 9 is connected to both the digital/analog converter 92 and the analog/digital converter 93.

The control means 9 causes the output terminal 120 and the analog/digital converter 93 to be conducted by closing the first switch for detection 72 and opening the second switch for detection 73. Therefore, the control means 9 can detect the voltage V3 of the output terminal 120, i.e., the voltage to be input to the laser diode driver 43 via the analog/digital converter 93.

Further, the control means 9 causes the second input terminal 110 and the analog/digital converter 93 to be conducted by opening the first switch for detection 72 and closing the second switch for detection 73. Therefore, the control means 9 can detect the voltage V2 of the second input terminal 110 via the analog/digital converter 93.

Moreover, the control means 9 raises the voltage V2 of the second input terminal 110 from a predetermined voltage value (for example, 0 V) in a stepwise manner. When the control means 9 detects that the voltage V2 of the second input terminal 110 becomes a voltage equal to the impressed voltage to be applied to the voltage adjustment circuit 91, the voltage V2 of the second input terminal 110 is holds at the voltage value of the impressed voltage Vin.

The voltage adjustment circuit 91 is connected to the laser control section 55 and laser diode driver 43. The voltage adjustment circuit 91 adjusts the voltage V3 of the output terminal 120 based on the voltage value of the voltage V1 of the first input terminal 100, i.e., the voltage V1 that is output from the laser control section55.

When the voltage V1 of the first input terminal 100 increases, the voltage V3 of the output terminal 120 is caused to decrease. On the other hand, when the voltage V1 of the first input terminal 100 decreases, the voltage V3 of the output terminal 120 is caused to increase.

The laser diode driver 43 changes an output of the laser beam emitted from the laser diode 5 on the basis of the voltage V3 of the output terminal 120.

Namely, the laser diode driver 43 causes the output of the laser beam to increase when the voltage V3 of the output terminal 120 increases, and the laser diode driver 43 causes the output of the laser beam to decrease when the voltage V3 of the output terminal 120 decreases.

Further, the laser diode driver 43 is connected to the section (not shown) of the laser control section 55. The laser diode driver 43 receives a voltage for setting an output of the laser beam to a current necessary to become the output power for recording, and a voltage for setting an output of the laser beam to a current necessary to become the output power for reproducing.

Next, operation of the optical disc drive 1 will be described.

The optical disc drive 1 moves the optical pick-up 3 to the target track (target address). When carrying out focus control, tracking control, sled control and rotation number control (rotation speed control), the optical disc drive 1 records (writes on) and reproduces (reads out) information (data) to and from a predetermined track of the optical disc 2.

When data is recorded onto the optical disc 2, the pre-groove that is formed on the optical disc 2 is reproduced (read out). Additionally, the data is recorded onto the optical disc 2 along the pre-groove.

When the data to be recorded onto the optical disc 2 is input to the optical disc drive 1 via an interface control section (not shown), the data is input to the encoder 54.

The data is encoded in the encoder 54, and modulated (EFM modulation) in the modulation method called EFM (Eight to Fourteen Modulation) to form an ENCODE EFM signal.

The ENCODE EFM signal is a signal formed from pulses. More specifically, each pulse has a predetermined length (period) of any one of 3T 11T. The ENCODE EFM signal is input from the encoder 54 to the laser diode driver 43.

The control means 9 set a given value for the current generator 83. The integration circuit 81 is then charged by causing a current to flow that is derived by subtracting a current flowing from the current generator 83 to the current mirror circuit 82 from the output current Iref of the current generator 83. As a result, the WRITE POWER signal that is analog voltage signal is output.

The Sampling signal that is generated in the encoder 54 based on the ENCODE EFM signal is input to the laser control section 55. Then, the laser control section 55 carries out sampling of the pit portions during writing in the laser control of recording system, and carries out sampling of the land portions during both reading and writing in the laser control of the reproducing system, thereby determining a current that flows to the laser diode 5, so that a value of the output of the laser diode 5 becomes a predetermined value. The laser control section 55 outputs the WRITE POWER signal when the ENCODE EFM signal is at a high level (H), and the laser control section 55 outputs the READ POWER signal when the ENCODE EFM signal is at a low level (L).

Thus, a pit having a given length is formed (written) in the optical disc 2 when the level of the ENCODE EFM signal is high (H), while a land having a given length is formed (written) in the optical disc 2 when the level of the ENCODE EFM signal is low (L).

In this way, data is written (recorded) to a given track of the optical disc 2.

Data is recorded from the inner side of the optical disc 2 to the outer side along the pre-groove in the optical disc 2.

In the encoder 54, a predetermined ENCODE EFM signal (random EFM signal) is generated in addition to the ENCODE EFM signal mentioned above. The random EFM signal is used for output adjustment (power control) of the laser when trial writing in a test area is carried out under OPC (Optimum Power Control) procedure for determining an optimum laser output during recording of data.

Here, the OPC procedure will be described. In the optical disc 2 of CD-R (Compact Disc-Recordable) type, a Lead-in Area having the ATIP specific information, a PMA (Program Memory Area), and a PCA (Power Calibration Area) are arranged in this order from the outer side to the inner side in a program area to record data. The PMA is an area to write a start time and an end time of a track, and so on.

The PCA is further divided into a Test Area for trial writing and a Count Area for recording the count number.

Since recordable-type optical discs such as CD-R and CD-RW that are manufactured by different manufacturers have differences in performance (in particular, in recording performance relative to a laser output), it is necessary to in advance determine an optimum laser output (optimum laser power) for recording for each optical disc before data is recorded onto the optical disc. For this purpose, normally, optical disc drives for these optical discs are configured so that an optical laser output for recording can be changed, for example, within 15 levels in a stepwise manner, and an optimum laser output that is most suitable to an optical disc is selected from the 15 levels, and a recording operation of data to the optical disc is carried out based on the optimum laser output.

In the OPC procedure, the trial writing in a Test Area can be carried out. During trial writing in a Test Area under the OPC procedure, the random EFM signal is input to the laser diode driver 43 from the encoder 54. Further, the control means 9 can change the level of a digital/analog converter (not shown) in the laser control section 55, into a plurality of levels by using serial communication. As a result, values of current in the plurality of levels can be generated, whereby WRITE POWER signals each having any one of a plurality of levels can be generated. Since the output current during writing is determined on the basis of the WRITE POWER signals, laser beams each having any one of a plurality of output power levels can be derived. Based on the EFM signal to be input to the laser diode driver 43, it is determined whether the current during writing will flow to the laser diode 5 or the GND (ground) terminal. This determination is carried out on the basis of the WRITE POWER signals, each of which may have any one of the plurality of levels.

In this way, the trial writing to the test area is carried out with laser beams having any one of the plurality of output levels (i.e., with the output of the laser beam being changed in a stepwise manner). Such trial writing may be carried out a number of times (e.g., 100 times). A flag indicating one trial writing is established in the Count Area with each trial writing.

In the OPC procedure, defining β as the amount of displacement between the centers of the waveforms of the signal with a period corresponding to 3T and the signal with a period corresponding to 11T in the random EFM signals, it is determined that an optimum laser output is the laser output of the laser beam corresponding to β that is the closest to the predetermined valueβ0 (e.g., four percent) within a plurality of β values corresponding to the WRITE POWER signals each having any one of the plurality of levels.

In this way, an optimum laser output for recording is determined, and data is recorded onto the optical disc 2 at this optimum laser output.

Here, the control means 9 detects a voltage value of the output terminal 120 in response to an output of the laser beam at each level when carrying out trial writing, with the outputs of the laser beams having the plurality of levels. The control means 9 then stores the voltage value in the memory 53.

After an optimum laser output for recording is determined, the voltage value of the output terminal 120 corresponding to the optimum laser output in all detected voltage values of the output terminal 120 is applied to the second input terminal 110 in the voltage adjustment circuit 91.

Consequently, the voltage of the output terminal 120 in the voltage adjustment circuit 91 becomes equal to the impressed voltage Vin applied to the second input terminal 110.

Namely, the voltage V3 of the output terminal 120 is held during recording to a voltage corresponding to the optimum laser output for recording in all detected voltage values of the output terminal 120 by the control means 9.

The voltage V3 of the output terminal 120 is held to a voltage corresponding to the optimum laser output for recording before data is actually recorded to the program area. When data is actually recorded to the program area, the data can be recorded from a given position, e.g., an initial record start position or a record restart position, at an optimum laser output.

During reproduction, the laser beam is emitted to a given track of the optical disc 2 from the laser diode 5 in the optical pick-up 3. The laser beam is reflected on the optical disc 2, and the reflected beam is received by means of the split photodiode 6 in the optical pick-up 3.

The current in response to the amount of received light is output from the split photodiode 6. This current is then converted with an I-V amplifier (not shown) into the voltage to be output from the optical pick-up 3.

The voltage output from the optical pick-up 3 (a detection signal) is input to the analog signal processor 40. An HF (RF) signal is generated by carrying out predetermined operations such as addition, amplification, and so on with the analog signal processor 40. The HF signal is an analog signal corresponding to pits and lands written onto the optical disc 2.

The HF signal is input to the servo processor 51. In the servo processor 51, the HF signal is digitized, and also EFM demodulated (Eight to Fourteen Modulation). As a result, an EFM signal may be obtained. The EFM signal is converted (decoded) into a predetermined form of data (DATA signal) in the servo processor 51, and then input to the decoder 52.

Next, the data is decoded to a predetermined form for communication (transmission) in the decoder 52, and transmitted to the external device (e.g., computer) via the interface control section.

Tracking control, sled control, focus control, and rotation number control (rotational speed control) in the reproducing operation, which are mentioned above, are carried out as follows.

As mentioned above, the voltage signal, into which the current signal from the split photodiode 6 in the optical pick-up 3 is converted, is input to the analog signal processor 40.

The analog signal processor 40 generates the tracking error (TE) signal (voltage signal) based on the current-voltage converted signal from the split photodiode 6.

The tracking error signal is a signal that represents an amount of displacement of the objective lens in a radial direction from the center of the track (i.e., an amount of displacement of the objective lens in a radial direction from the center of the track) and the direction thereof.

The tracking error signal is input to the servo processor 51. In the servo processor 51, the tracking error signal may undergo predetermined signal processing, such as, for example inversion of phase, amplification and the like. Therefore, the tracking servo signal (voltage signal) is generated. A given drive voltage is applied to the tracking actuator 41 via the driver 21 as a result of the tracking servo signal. The objective lens moves toward the center of the track by driving the tracking actuator 41. Namely, the tracking servo is engaged.

A limit exists to follow the objective lens to the track with the drive of the tracking actuator 41. Therefore, to cover the tracking, the objective lens may be controlled so as to be returned to the reference position (carry out the sled control) by moving, under the drive of the sled motor 7 via the driver 22, the optical pick-up base toward the direction equal to the mobile direction of the objective lens.

The analog signal processor 40 generates a focusing error (FE) signal (voltage signal) based on the current-voltage converted signal from the split photodiode 6.

The focus error signal is a signal that represents an amount of the displacement of the objective lens in the optical axis direction (rotational axis direction) from a focus position (i.e., the amount of the displacement of the objective lens from the focus position in the optical axis direction (rotational axis direction)).

The focus error signal is input to the servo processor 51. In the servo processor 51, the focus error signal may undergo predetermined signal processing, such as, for example, inversion of phase, amplification, and the like. As a result, a focus servo signal (voltage signal) is generated. The given driving voltage is applied to the focus actuator 42 via the driver 21 based on the focus servo signal. The objective lens moves toward the focus position by driving the focus actuator 42. Namely, the focus servo is engaged.

Further, in the servo processor 51, the control signal (voltage signal) to control the rotation number (rotational speed) of the spindle motor 11, i.e., the control signal to set to a target value the rotation number of the spindle motor 11, is generated. Then the control signal is input to the driver 23.

The driving signal (voltage signal) to drive the spindle motor 11 based on the control signal is generated in the driver 23.

The driving signal output from the driver 23 is input to the spindle motor 11. The spindle motor 11 is then driven based on the driving signal. Further, the spindle servo is engaged so that the rotation number of the spindle motor 11 becomes equal to a target value.

Next, the operation of the circuit when the output of the laser beam becomes a predetermined laser output level while the output level is changed in a stepwise manner during trial writing will be described.

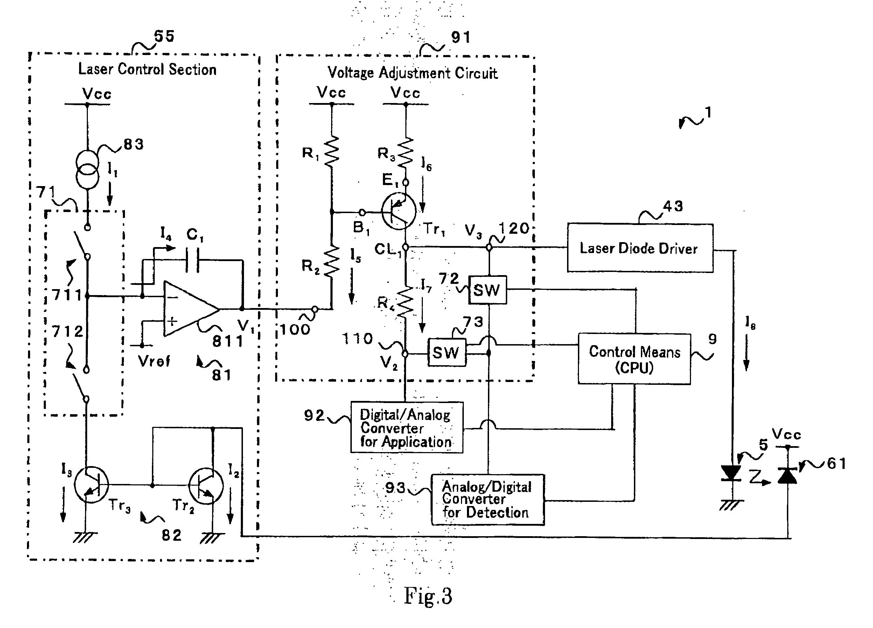

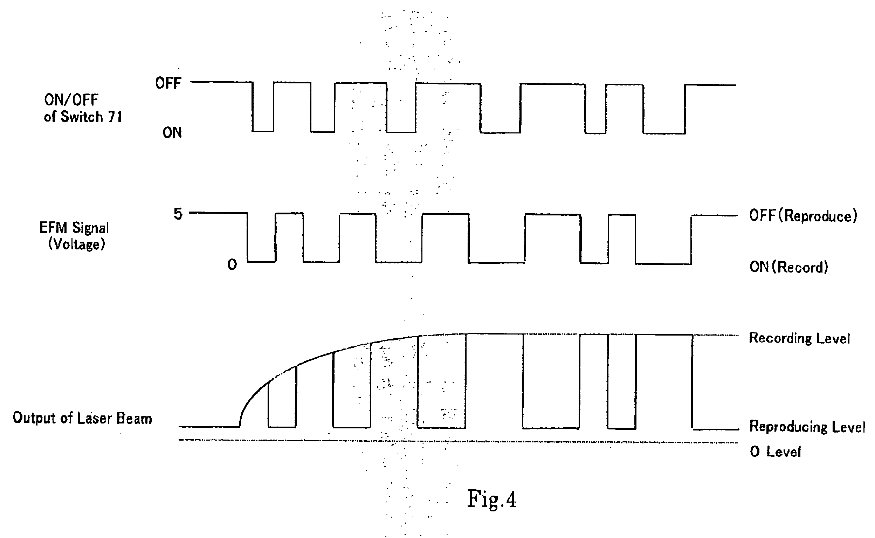

Fig. 3 shows a flow of an electric current in the circuit shown in Fig. 2 when an output of a laser beam becomes a predetermined laser output level. Fig. 4 is a timing chart illustrating a WRITE POWER signal and an output of a laser beam that is increasing from a reproduction level to a record level.

In the trial writing (OPC) procedure, the optical disc 2 is rotated at a predetermined rotational speed, and the laser diode 5 is driven such that an output of the laser beam of the laser diode 5 is that used during reproduction by means of the reproducing circuit (not shown) in the laser diode driver 43.
(1) Operation until a laser output becomes from that for reproducing to that at a predetermined level
   <1> If trial writing is carried out at a predetermined laser output level in the outputs of the laser beam each having any one of the plurality of levels during trial writing, the current output from the current generator 83 is set to a current I1 corresponding to the predetermined laser output level.
   <2> Then, the trial writing is started. During trial writing, the WRITE POWER signal as shown in Fig. 4 is input to the laser diode driver 43. Shortly after this input, the interlock switch 71 in the laser control section 55 is turned ON. Thus, a current starts to flow from the current generator 83 to the current mirror circuit 82 and the integration circuit 81.
   <3> Before the start of the trial writing, a current I2 corresponding to the laser output during reproduction flows from the photodiode for detecting a laser beam 61 to the transistor Tr2 in the current mirror circuit 82. In this state, if the interlock switch 71 is turned ON, a current I3 equal to the current I2 flowing to the transistor Tr2 flows to the transistor Tr3 in the current mirror circuit 82.
   <4> Further, when the interlock switch 71 is turned ON, a current 14, which is equal to a difference between the current I1 and the current I3, flows to the condenser C1 in the integration circuit 81, thereby charging the condenser C1.
   <5> Since the output voltage V1 of the integration circuit 81, i.e., the voltage V1 of the first input terminal 100 decreases as the condenser C1 is charged, a current 15 starts to flow to the resistance element R2.
   <6> When the current I5 starts to flow to the resistance element R2, the voltage of the base terminal B1 of the transistor Tr1 drops, thereby a current I6 and a current I7start to flow to the transistor Tr1 and the resistance element R4 respectively. Thus, the voltage of the collector terminal CL1 of the transistor Tr1, i.e., the voltage V3 of the output terminal 120 increases.
   <7> As mentioned above, when the voltage V3 of the output terminal 120 increases, the laser diode driver 43 increases a current I8 flowing to the laser diode 5, thereby increasing the output of the laser beam.
      Consequently, the output of the laser beam emitted from the laser diode 5 increases to a level that exceeds a level output during reproduction.
   <8> The current responsive to the output of the laser beam emitted from the laser diode 5 flows from the photodiode for detecting a laser beam 61. This current is greater than that corresponding to the laser output during reproduction.
   <9> Thus, the current I2 flowing to the transistor Tr2 of the current mirror circuit 82 increases, and the current I3 flowing to the transistor Tr3 increases in accordance with this increase.
   <10> The current 14, which is equal to a difference between the current I1 output from the current generator 83 and the current I3 during the state <9>, flows to the condenser C1 in the integration circuit 81, thereby further charging the condenser C1. In addition, the difference current I4 in this state is less than the current I4 in the state <4> mentioned above.
   <11> Thus, the output voltage V1 of the integration circuit 81 (i.e., voltage V1 of the first input terminal 100) further decreases compared to the state <5> as the condenser C1 is charged in the state <10>, and the currents I5, I6 and I7, which flow to the resistance element R2, the transistor Tr1 and the resistance element R4 respectively, increase. Consequently, the voltage V3 of the output terminal 120 increases comparative to that in the state <6>.
   <12> If the voltage V3 of the output terminal 120 increases comparative to that in the state <6>, the laser diode driver 43 increases the I8 flowing to the laser diode 5 comparative to that in the state <7>, thereby further increasing the output of the laser beam.
   <13> In this way, the output of the laser beam of the laser diode 5 rises to the predetermined laser output level. As shown in Fig. 4, the output level of the laser beam parabolically rises until a predetermined laser output level (i.e., recording level) is attained.
   <14> If the output of the laser beam of the laser diode 5 becomes equal to the predetermined laser output level, the current I2 flowing to the transistor Tr2 of the current mirror circuit 82 becomes equal to the current I1 output from the current generator 83. Namely, the current I3 flowing to the transistor Tr3 becomes equal to the current I1.
   <15> When the current I3 flowing to the transistor Tr3 is equal to the current I1, the current I4 does not flow to the condenser C1. Therefore, the output voltage V1 of the integration circuit 81 (voltage V1 of the first input terminal 100) becomes equal to a predetermined value. Therefore, the voltage V3 of the output terminal 120 keeps at the voltage when the output of the laser beam emitted from the laser diode 5 becomes a predetermined laser output level.

   Here, if the output of the laser beam becomes greater than the predetermined laser output level, the currents I2 and I3, which flow to the transistors Tr2 and Tr3 in the current mirror circuit 82 respectively, become greater than the current I1 output from the current generator 83 because the current flowing from the photodiode for detecting a laser beam 61 becomes greater.
   In this case, since the condenser C1 is discharged and a current I3 greater than the current I1 output from the current generator 83 flows to the transistor Tr3 in the current mirror circuit 82, the voltage V1 of the first input terminal 100 increases. Thus, the current 15 flowing to the resistance element R2 becomes smaller. As a result, the voltage of the base terminal B1 of the transistor Tr1 increases.
   When the voltage of the base terminal B1 of the transistor Tr1 increases, the currents I6 and I7, which flow to the transistor Tr1 and the resistance element R4 respectively, decrease. Thus, the voltage V3 of the output terminal 120 drops. As mentioned above, the laser diode driver 43 decreases the output of the laser beam when the voltage V3 of the output terminal 120 drops. Namely, the output of the laser beam returns to the predetermined laser output level.
   On the other hand, if the output of the laser beam becomes less than the predetermined laser output level, the currents I2 and I3, which flow to the transistors Tr2 and Tr3 in the current mirror circuit 82 respectively, become less than the current I1 output from the current generator 83 because the current flowing from the photodiode for detecting a laser beam 61 also becomes smaller.
   In this case, the current I4, which is equal to a difference between the current I1 and the current I3, flows to the condenser C1, thereby charging the condenser C1. Thus, the voltage V1 of the first input terminal 100 drops and the voltage V3 of the output terminal 120 also drops. As a result, since the current 15 flowing to the resistance element R2 becomes greater, the voltage of the base terminal B1 of the transistor Tr1 drops.
   When the voltage of the base terminal B1 of the transistor Tr1 drops, the currents I6 and I7, which flow to the transistor Tr1 and the resistance element R4 respectively, increase. Thus, the voltage V3 of the output terminal 120 increases. As mentioned above, the laser diode driver 43 increases the output of the laser beam when the voltage V3 of the output terminal 120 increases. Namely, the output of the laser beam returns to the predetermined laser output level.
   In this way, after the output of the laser beam became equal to a predetermined laser output level, if the output of the laser beam becomes greater than the predetermined laser output level, the optical disc drive 1 operates so that the output of the laser beam is decreased. On the other hand, after the output of the laser beam became equal to a predetermined laser output level, if the output becomes less than the predetermined laser output level, the optical disc drive 1 operates so that the output of the laser beam is increased. Accordingly, an output of the laser beam can be kept constant at a predetermined laser output level.
   Further, if data is actually recorded in the program area, the optical disc drive 1 operates so that the output of the laser beam is kept constant at the optimum level for recording, once the output of the laser beam becomes equal to an optimum laser output for recording, as well as during trial writing.
   The control means 9 detects a voltage value of the output terminal 120 to determine an output of the laser beam that will become a predetermined laser output level between after the output of the laser beam became the predetermined laser output level and until the trial writing with the predetermined laser output level is finished.
   Next, the control operation of the control means 9 for detecting a voltage value of the output terminal 120 corresponding to a predetermined laser output level will be described.
(2) Detection of a voltage value of the output terminal 120 to determine an output of the laser beam
   <1> In the detection operation of a voltage value of the output terminal 120, a first switch 72 for detection is closed and a second switch 73 for detection is opened. The control means 9 detects a voltage value of the output terminal 120 corresponding to a predetermined laser output level via the analog/digital converter 93.
   <2> The voltage value of the output terminal 120 corresponding to the predetermined laser output level, which was detected in the state <1>, is stored in the memory 53.

   Similarly, in the other output levels (for example, 14 levels) of the laser beam, the detection of the voltage value of the output terminal 120 is carried out.
   Thus, in all of the plurality of output levels of the laser beam, the voltage value of the output terminal 120 corresponding to the output of the laser beam at each level is detected.
   Then, after the optimum level for recording of laser output is determined, the voltage value of the output terminal 120 (impressed voltage Vin) corresponding to the optimum level for recording is applied to the second input terminal 110.
   As mentioned above, the application of the impressed voltage Vin to the second input terminal 110 is carried out before data is actually recorded to the program area.
   When actually recording data to the program area, the voltage V3 of the output terminal 120 is held at a voltage value corresponding to the optimum laser output for recording from a given position e.g., an initial record start position or a record restart position.
   Next, operation of the voltage hold means (the voltage adjustment circuit 91), which holds the voltage V3 of the output terminal 120 at the voltage value when the output of the laser beam becomes the optimum level for recording, will be described.
(3) Hold of a voltage value by the voltage hold means
   <1> When the voltage V3 of the output terminal 120 is held at a voltage value when the output of the laser beam becomes the optimum level for recording, the second switch 73 is closed and the first switch 72 is opened.
   <2> With the voltage V2 of the second input terminal 110 being detected via the analog/digital converter 93, as mentioned above, the voltage V2 of the second input terminal 110 is raised from a predetermined voltage value (for example, 0 V) in a stepwise manner.
   <3> When the voltage V2 of the second input terminal 110 becomes the voltage corresponding to the optimum laser output for recording, the voltage is applied to the second input terminal 110 as an impressed voltage Vin.
   <4> Thus, the voltage V3 of the output terminal 120 becomes equal to the voltage value applied to the second input terminal 110. The voltage V3 of the output terminal 120 is held to the voltage value of the impressed voltage Vin by keeping applying the voltage value Vin to the second input terminal 110.

   As mentioned above, when data is actually recorded to the program area, the voltage value corresponding to the optimum laser output for recording is already applied to the second input terminal 110. Therefore, the voltage V3 of the output terminal 120 becomes the voltage value corresponding to the optimum laser output for recording.
   Namely, data recording can be started with the output of the laser beam being the optimum laser output during recording.
   Thus, when actually recording data to the program area, data can be recorded with the optimum laser output during recording from a given position e.g., an initial record start position or a record restart position.
   Here, after the impressed voltage Vin is applied, i.e., after the voltage V3 of the output terminal 120 is held at the voltage value corresponding to the optimum laser output for recording, the voltage adjustment circuit 91 controls a current flowing to the laser diode 5 via the laser control section 55 so that the voltage V3 of the output terminal 120 becomes the optimum laser output during the recording of data onto an optical disc 2 if necessary.
   Next, operation of the voltage adjustment circuit 91 to increase the voltage V3 of the output terminal 120 after the impressed voltage Vin is applied will be described.
(4) Operation of the voltage adjustment circuit 91 to increase the voltage V3 of the output terminal 120 after the impressed voltage Vin is applied
   An increase in temperature of the laser diode 5 is given as one example to be caused to increase the voltage V3 of the output terminal 120 after the impressed voltage Vin is applied.
   <1> As the temperature of the laser diode 5 increases, an output of the laser beam decreases compared to before the temperature increases.
   <2> Thus, if the temperature of the laser diode 5 increases after the voltage V3 of the output terminal 120 is held at a voltage value corresponding to the optimum laser output for recording, the output of the laser beam decreases less than the optimum laser output for recording.
   <3> When the output of the laser beam becomes less than the optimum laser output for recording, the laser control section 55 controls so that the output of the laser beam returns to the optimum laser output for recording.
   <4> As mentioned above, when the output of the laser beam becomes less than the optimum laser output for recording, the voltage V1 of the output terminal of the integration circuit 81 in the laser control section 55, i.e., the voltage V1 of the first input terminal 100 of the voltage adjustment circuit 91 drops.
   <5> In the voltage adjustment circuit 91, the voltage V3 of the output terminal 120 becomes equal to the impressed voltage Vin applied to the second input terminal 110 before the temperature of the laser diode 5 increases. However, when the temperature of the laser diode 5 increases, i.e., when the voltage V1 of the first input terminal 100 of the voltage circuit 91 decreases, the voltage V3 of the output terminal 120 increases greater than the impressed voltage Vin by a flow of a current to the resistance element R4.
   <6> Thus, the laser diode driver 43 causes the current greater than that flowing before the temperature increases to flow the laser diode 5. Therefore, the output of the laser beam is returned to the optimum laser output for recording.

In this way, after the impressed voltage Vin was applied to the second input terminal 110, i.e., after the voltage V3 of the output terminal 120 was held at the voltage value corresponding to the optimum laser output for recording, if it is necessary to raise the voltage V3 of the output terminal 120 during the recording of data to the optical disc 2, the voltage V3 of the output terminal 120 is automatically adjusted by the voltage adjustment circuit 91.

Thus, the output of the laser beam can be kept constant at an optimum level for recording during the recording of data to the optical disc 2. Namely, the optical disc drive 1 can handle an increase in temperature (temperature change) of the laser diode 5.

As explained above, according to the optical disc drive 1of the present invention, a data recording operation can be started when an output of a laser beam becomes an optimum laser output for recording.

Thus, when recording data onto an optical disc 2, the optical disc drive 1 can resume from a consecutive position i.e., record restart position after suspension of the data recording operation without overwriting. Therefore, in the optical disc drive having a buffer underrun error proof (BURN-Proof) function, a data recording operation can be suspended and then resumed so that the data is consecutively written onto the optical disc with an optimum output level for recording.

Further, after the optimum laser output for recording is determined during trial writing operation, the optical disc drive 1 holds the voltage value to make it an optimum laser output for recording. Therefore, when data is actually recorded to the program area, the output of the laser beam can be set to the optimum laser output for recording from an initial record start position.

Moreover, if it is necessary to raise the voltage V3 of the output terminal 120 after the voltage V3 is held at the voltage value when the output of the laser beam becomes the optimum laser output for recording, the voltage V3 can be adjusted by the voltage adjustment circuit 91. Therefore, the output of the laser beam can be kept constant at an optimum level for recording during the recording of data to the optical disc 2. Namely, the optical disc drive 1 can handle an increase in temperature (temperature change) of the laser diode 5.

As described above, it should be noted that even though the optical disc drive of the present invention has been described with reference to the embodiment shown in the drawings, the present invention is not limited to such a structure, various elements described above can be replaced with any other element capable of performing the same or a similar function.

For example, the optical disc drive of the present invention is not limited to the device capable of recording and/or reproducing data to and/or from an optical disc. The present invention can be applied to record only optical disc drives.

The optical disc drive of the present invention may also be applied to other various optical disc drives for recording and/or reproducing to and/or from various types of optical disc.

Further, in this embodiment, the voltage of the node to be held (the section for determining the output of the laser beam) is detected during trial writing operation, but the present invention is not limited to such an operation. The voltage of the node to be held may be detected when data is actually being recorded to the program area, e.g., at the start of record.

Moreover, in this embodiment, the voltage equal to the voltage detected at the output terminal (the voltage to be input to a driver circuit) is applied to the second input terminal, but the present invention is not limited to thereof. For example, the voltage less than the voltage detected at the output terminal may be applied to the second input terminal.

Therefore, if it is necessary to raise a voltage value of an output terminal after the voltage is held at a voltage value when the output of the laser beam becomes an optimum laser output for recording, the voltage of the output terminal can be automatically caused to drop less than the detected voltage value of the output terminal, and the output of the laser beam can be kept constant at an optimum level for recording during the recording of data to the optical disc.

Further, the optical disc drive of the present invention utilizes a laser diode driver (driver circuit), which is configured so as to increase an output of a laser beam if a voltage of an output terminal (a voltage to be input to the driver circuit) increases, and to decrease the output of the laser beam if the voltage of the output terminal drops. However, the present invention is not limited to such a structure. For example, the present invention may utilize a laser diode driver, which is configured so as to increase an output of a laser beam if a voltage of an output terminal drops, and to decrease the output of the laser beam if the voltage of the output terminal increases.

## Claims

1. An optical disc drive that can read out data from or record and read out data to and from an optical disc, the optical disc drive comprising:
a rotational driving mechanism for rotating the loaded optical disc;
an optical pick-up having emitting means that emits a laser beam for recording data to the optical disc;
a laser control circuit for controlling an output of the laser beam;
a drive circuit for driving said emitting means; and
voltage hold means provided between said laser control circuit and said drive circuit for holding a voltage to be input to said drive circuit at a voltage value at which an output of the laser beam becomes an optimum level for recording data onto the optical disc.

2. The optical disc drive according to claim 1, wherein said voltage hold means holds the voltage to be input to said drive circuit to the voltage value, at which the output of the laser beam becomes the optimum level for recording, after trial writing is carried out onto the optical disc by changing the output of the laser beam in a stepwise manner to determine the optimum level of the output of the laser beam for recording data onto the optical disc.

3. The optical disc drive according to claim 2, further comprising detection means for detecting voltage values corresponding to a plurality of output levels of the laser beam during the trial writing, in which said voltage hold means is configured so as to hold the voltage to be input to said drive circuit to a voltage value corresponding to the optimum level among the voltage values detected by said detection means.

4. The optical disc drive according to claim 1, further comprising a memory for storing data, and the optical disc drive being configured so that a recording operation is suspended when an amount of data stored in said memory becomes equal to or less than a predetermined amount during the recording operation, wherein said voltage hold means is configured so as to hold the voltage to be input to said drive circuit just before the recording operation is suspended.

5. The optical disc drive according to claim 4, wherein said voltage hold means includes a circuit having a first input terminal to which the voltage output from said laser control circuit is input, a second input terminal to which an impressed voltage is input, and an output terminal for outputting the voltage to be input to said drive circuit, wherein the optical disc drive is constructed so as to apply the impressed voltage to the second input terminal so that the voltage to be input to said drive circuit becomes the voltage at which the output of the laser beam becomes the optimum level.

6. The optical disc drive according to claim 5, wherein said voltage hold means has a voltage adjustment circuit that can adjust the voltage to be input to said drive circuit, wherein the optical disc drive is configured so that the voltage to be input to said drive circuit is raised by said voltage adjustment circuit if it is necessary to raise the voltage to be input to said drive circuit after the impressed voltage has been applied.

7. The optical disc drive according to claim 6, wherein said voltage adjustment circuit has a transistor between the first input terminal and the output terminal, and said voltage adjustment circuit also has a resistance element between the second input terminal and the output terminal.

8. The optical disc drive according to claim 7, wherein the transistor is a PNP bipolar transistor having a base terminal, a collector terminal and an emitter terminal, the base terminal of the transistor being connected to the first input terminal, and the collector terminal of the transistor being connected to the output terminal.

9. The optical disc drive according to claim 5, further comprising a digital/analog converter that is used for applying the impressed voltage.

10. The optical disc drive according to claim 5, further comprising an analog/digital converter that is used for detecting the voltage to be input to said drive circuit.

11. The optical disc drive according to claim 1, wherein the emitting means has a laser diode.

12. The optical disc drive according to claim 1, wherein said drive circuit is configured so as to increase the output of the laser beam when the voltage to be input to said drive circuit is raised, and so as to decrease the output of the laser beam when the voltage to be input to said drive circuit drops.
